(19) **Europäisches Patentamt European Patent Office Office européen des brevets**

(11) **EP 2 445 122 A1**

(12) **EUROPEAN PATENT APPLICATION**
published in accordance with Art. 153(4) EPC

(43) Date of publication:
**25.04.2012 Bulletin 2012/17**

(51) Int Cl.:
***H04B 7/14*** *(2006.01)*

(21) Application number: **09846252.6**

(86) International application number:
**PCT/KR2009/007792**

(22) Date of filing: **24.12.2009**

(87) International publication number:
**WO 2010/147280 (23.12.2010 Gazette 2010/51)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **16.06.2009 KR 20090053315**

(71) Applicant: **Solid Technologies Inc.**
**Seongnam-si, Gyeonggi-do 463-847 (KR)**

(72) Inventors:
• **KIM, Kwon**
**Seoul 139-202 (KR)**

• **KIM, Hyun Chae**
**Seoul 134-070 (KR)**
• **KIM, Young In**
**Seoul 134-866 (KR)**
• **KIM, Hyoung Ho**
**Seoul 122-040 (KR)**
• **KIM, Jun Min**
**Seoul 151-050 (KR)**
• **KIM, Chong Hoon**
**Seoul 135-230 (KR)**

(74) Representative: **Pfenning, Meinig & Partner GbR**
**Theresienhöhe 13**
**80339 München (DE)**

(54) **WIRELESS REPEATER AND METHOD OF REMOVING ECHO SIGNAL THEREOF**

(57) The present invention relates to a wireless repeater capable of effectively removing an echo signal of a signal outputted from the wireless repeater that is fed back and re-input, and to a method of removing the echo signal. By Thus removing an echo signal through replicating an echo signal component in a signal inputted into the wireless repeater and removing the replicated echo signal component from the input signal, the present invention can provide high-quality communication service, and effectively suppress the oscillation of the wireless repeater by not only limiting the size of an input signal from which an echo signal component has been removed to the size of a reference signal, but also by varying a reference signal size value according to input signal size.

FIG. 3

EP 2 445 122 A1

## Description

[Technical Field]

Embodiments of the present invention relate to a wireless repeater and a method of cancelling an echo signal thereof, and more particularly to a wireless repeater able to efficiently cancel an echo signal fed back from an output side thereof to an input side thereof and a method of cancelling an echo signal thereof.

[Background Art]

In general, a repeater is used to transmit a signal between a base station and a terminal, to provide a service to a shadow area, and to improve service quality. A wireless repeater receives a signal from a base station or a terminal via a reception antenna, amplifies the signal, and transmits the amplified signal to a terminal or a base station via a transmission antenna, thereby performing a communication service.

However, in case of a wireless repeater, since the frequency of the signal received via the reception antenna is equal to that of the signal transmitted via the transmission antenna, a part of the signal transmitted via the transmission antenna is received via the reception antenna as an echo signal, and the received echo signal is combined with an original signal received from the base station or the terminal, is amplified and is transmitted via the transmission antenna again. If this process is repeated, the wireless repeater oscillates so as to restrict amplification, thereby deteriorating performance of the wireless repeater.

In order to prevent oscillation due to such an echo signal, an interference canceller system (ICS) repeater to cancel an echo signal from an original signal received from a base station or a terminal is used. The ICS repeater generally uses a least mean square (LMS)-based adaptive algorithm in order to cancel an echo signal.

[Disclosure]

[Technical Problem]

Therefore, it is an aspect of the present invention to provide a wireless repeater able to provide a high-quality communication service by duplicating an echo signal component included in a signal input to the wireless repeater and cancelling the echo signal component from the input signal, and a method of cancelling an echo signal thereof.

It is another aspect of the present invention to provide a wireless repeater able to efficiently suppress oscillation of a wireless repeater by limiting the level of an input signal, from which an echo signal component has been cancelled, to the level of a reference signal and changing the level of the reference signal according to the level of the input signal, and a method of cancelling an echo signal thereof.

[Technical Solution]

In accordance with one aspect of the present invention, there is provided a wireless repeater including a reception unit configured to receive a signal from a base station or a terminal, a signal canceller configured to cancel an echo signal component included in the received signal, a limiter configured to limit the level of a relay signal, from the echo signal component has been cancelled, to the level of a reference signal, and a transmission unit configured to transmit the relay signal, the level of which has been limited to the level of the reference signal, to the terminal or the base station.

The wireless repeater may further include a signal generator configured to estimate a wireless environment where the echo signal is generated and to generate an echo duplication signal matching the echo signal component.

The wireless repeater may further include a signal delay unit to delay the output of the relay signal and output the delayed relay signal to the signal generator, and the signal generator may estimate the wireless environment using a complex adaptive algorithm of a regressor signal and the relay signal.

The signal canceller may subtract the echo duplication signal from the received signal and generates the relay signal, from which the echo signal component has been cancelled.

The received signal may include a combination of an original signal received from the base station or the terminal and the echo signal component received via the wireless environment.

The wireless repeater may further include a signal measurement unit configured to measure the level of the relay signal input to the limiter, and the limiter may change the level of the reference signal according to the level of the relay signal and limit the level of an output signal.

The wireless repeater may further include a filter configured to remove an unnecessary wave generated when the limiter limits the level of the output signal to the level of the reference signal.

In accordance with another aspect of the present invention, there is provided a method of cancelling an echo signal of a wireless repeater, including receiving a signal from a base station or a terminal, cancelling an echo signal component included in the received signal, limiting the level of a relay signal, from which the echo signal component has been cancelled, to the level of a reference signal, and transmitting the relay signal, the level of which has been limited to the level of the reference signal, to the terminal or the base station.

The method may further include a wireless environment where the echo signal is generated and generating an echo duplication signal matching the echo signal component.

The method may further include delaying the output of the relay signal using a complex adaptive algorithm, and the estimating the wireless environment may include estimating the wireless environment using a complex adaptive algorithm of a regressor signal and the relay signal.

The cancelling the signal may include subtracting the echo duplication signal from the received signal and generating the relay signal, from which the echo signal component has been cancelled.

The method may further include measuring the level of the relay signal, from which the echo signal component has been cancelled, and changing the level of the reference signal according to the level of the relay signal and limiting the level of an output signal.

The method may further include removing an unnecessary wave generated when the level of the output signal is limited to the level of the reference signal.

[Advantageous Effects]

According to the embodiments of the present invention, by duplicating an echo signal component included in a signal input to a wireless repeater using a CSS-LMS algorithm using a small amount of resources among LMS adaptive algorithms of an ICS repeater and cancelling the echo signal component from the signal, it is possible to efficiently cancel the echo signal from an original image received from a base station or a terminal.

According to the embodiments of the present invention, by limiting the level of an input signal, from which the echo signal component has been cancelled, to the level of a reference signal using a limiter, it is possible to efficiently suppress oscillation of the wireless repeater even when the echo signal is not temporarily cancelled. In addition, by changing the level of the reference value according to the level of the input signal and limiting the level of an output signal, it is possible to improve the effect for suppressing oscillation of the wireless repeater.

According to the embodiments of the present invention, by removing an unnecessary wave generated in other signal bands using a filter (shaping filter) when the level of the input signal is limited to the level of the reference signal, it is possible to minimize influence of the other signal bands.

[Description of Drawings]

The above and other objects, features and other advantages of the present invention will be more clearly understood from the following detailed description taken in conjunction with the accompanying drawings, in which:

FIG. 1 is a diagram showing a relay environment of a wireless repeater according to an embodiment of the present invention;
FIG. 2 is a block diagram showing the configuration of a wireless repeater having an echo canceller unit according to an embodiment of the present invention;
FIG. 3 is a block diagram of the echo canceller unit according to an embodiment of the present invention;
FIG. 4 is a block diagram showing in detail a variable limiter applied to the present invention;
FIG. 5 is a flowchart illustrating a method of cancelling an echo signal of a wireless repeater according to an embodiment of the present invention;
FIG. 6 is a flowchart illustrating a process of cancelling an echo signal component in FIG. 5; and
FIG. 7 is a flowchart illustrating a process of limiting the level of a relay signal, from which an echo signal component has been cancelled, in FIG. 5.

[Best Mode]

Hereinafter, embodiments of the present invention will be described with reference to the accompanying drawings.

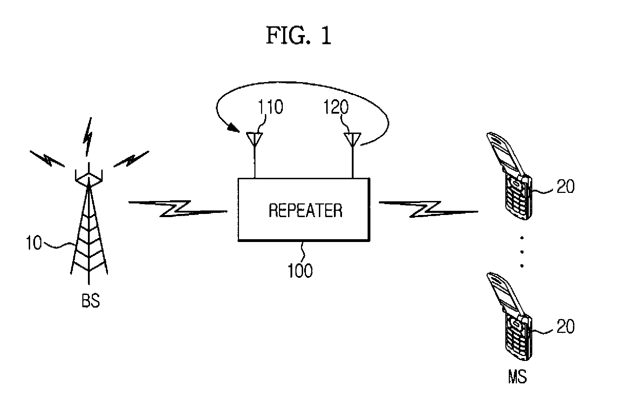

FIG. 1 is a diagram showing a relay environment of a wireless repeater according to an embodiment of the present invention.

In FIG. 1, the wireless repeater 100 according to the embodiment of the present invention includes a donor antenna 110 and a service antenna 120 to perform both transmission and reception. The wireless repeater amplifies a downlink signal received from a base station 10 via the donor antenna 110, transmits the signal to a terminal 20 via the service antenna 120, amplifies an uplink signal received from the terminal 20 via the service antenna 120 and transmits the signal to the base station 10 via the donor antenna 110.

Since the frequencies of the transmitted and received signals are equal, a part of the signal transmitted via the transmission antenna (the donor antenna 110 or the service antenna 120) is received via the reception antenna (the service antenna 120 or the donor antenna 110) as an echo signal y'[n] in a wireless environment. Since the received echo signal y'[n] is combined with an original signal received from the base station 10 or the terminal 20 and is amplified, the wireless repeater 100 oscillates. In order to prevent oscillation, in the embodiment of the present invention, an echo canceller unit able to efficiently cancel the echo signal y'[n] included in the signal input to the wireless repeater 100 is provided.

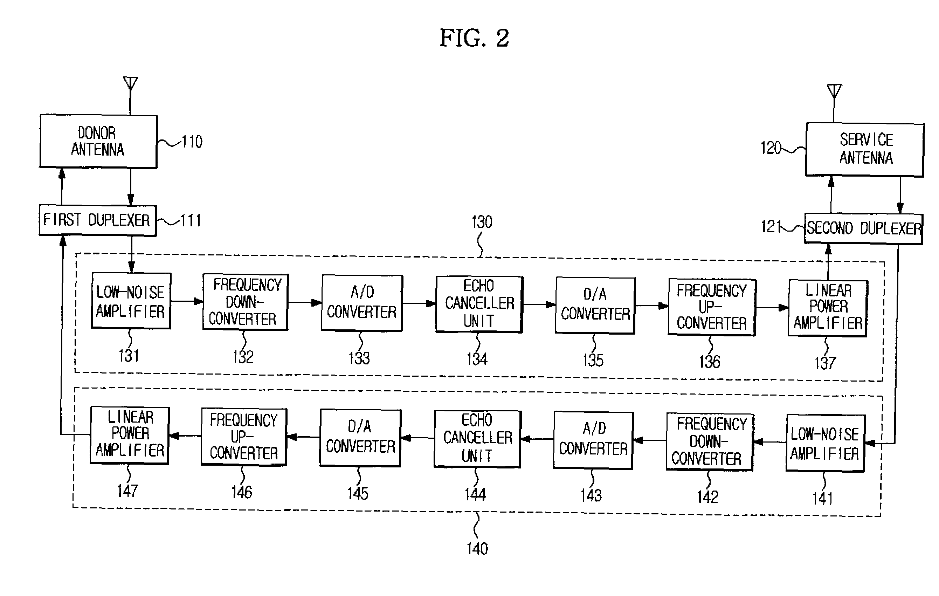

FIG. 2 is a block diagram showing the configuration of a wireless repeater having an echo canceller unit according to an embodiment of the present invention.

In FIG. 2, the wireless repeater 100 according to the embodiment of the present invention includes a donor antenna 110 to transmit or receive a signal to or from a signal transmission station such as a base station 10 or a gap filler, a first duplexer 111 to switch between a transmission unit and a reception unit for signal transmission and reception via the donor antenna 110, a service antenna 120 to transmit or receive a signal to or from a user terminal such as a terminal 20 or a wireless LAN reception modem, a second duplexer to switch between a transmission unit and a reception unit for signal transmission and reception via the service antenna 120, a downlink 130 to process the signal received via the donor antenna 110 and to output the signal to the service antenna 120, and an uplink 140 to process the signal received via the service antenna 120 and to output the signal to the donor antenna 110.

The downlink 130 and the uplink 140 include low-noise amplifiers 131 and 141, frequency down-converters (DNCs) 132 and 142, analog/digital (A/D) converters 133 and 143, echo canceller units (EUCs) 134 and 144, digital/ analog (D/A) converters 135 and 145, frequency up-converters (UPCs) 136 and 146 and linear power amplifiers (LPAs) 137 and 147, respectively.

Operations of the downlink 130 and the uplink 140 to process the signals received via the donor antenna 110 and the service antenna 120 and to output the signals via the service antenna 120 and the donor antenna 110 will now be described.

The signal received via the donor antenna 110 of the wireless repeater 100 is input to the low-noise amplifier 131 via the first duplexer 111. The signal received via the donor antenna 110 is a signal including a combination of an original signal received from the base station 10 and an echo signal y'[n] component of a previously output signal as an analog signal of a radio frequency (RF) band. The low-noise amplifier 131 amplifies the signal while minimizing noise included therein, and the signal amplified by the low-noise amplifier 131 is converted from the signal of the RF band into a signal of an intermediate frequency (IF) band via the frequency DNC 132. The analog signal of the IF band is converted into a digital signal via the A/D converter 133 and is input to the EUC 134. The EUC 134 cancels the echo signal y'[n] component from the digital input signal converted by the A/D converter 133 and extracts only an original signal to be transmitted. The extracted original signal is subjected to a reverse signal conversion process, is converted into an analog signal of an RF band, and is transmitted to the terminal 20. More specifically, the original signal extracted by the EUC 134 is converted into the analog signal via the D/A converter 135, is converted into the signal of the RF band via the frequency UPC 136, is amplified via the LPA 137, and is transmitted to the terminal 20 via the second duplexer 121 and the service antenna 120, thereby performing the operation of the downlink 130. Conversion into the signal of the IF band in the frequency DNC 132 and the frequency UPC 136 may be omitted.

The signal received via the service antenna 120 of the wireless repeater 100 is input to the low-noise amplifier 141 via the second duplexer 121. The signal received via the service antenna 120 is a signal including a combination of an original signal received from the terminal 20 and an echo signal y'[n] component of a previously output signal as an analog signal of a radio frequency (RF) band. The low-noise amplifier 141 amplifies the signal while minimizing noise included therein, and the signal amplified by the low-noise amplifier 141 is converted from the signal of the RF band into a signal of an intermediate frequency (IF) band via the frequency DNC 142. The analog signal of the IF band is converted into a digital signal via the A/D converter 143 and is input to the EUC 144. The EUC 144 cancels the echo signal y'[n] component from the digital input signal converted by the A/D converter 143 and extracts only an original signal to be transmitted. The extracted original signal is subjected to a reverse signal conversion process, is converted into an analog signal of an RF band, and is transmitted to the base station 10. That is, the original signal extracted by the EUC 144 is converted into the analog signal via the D/A converter 145, is converted into the signal of the RF band via the frequency UPC 146, is amplified via the LPA 147, and is transmitted to the base station 10 via the first duplexer 111 and the donor antenna 110, thereby performing the operation of the uplink 140.

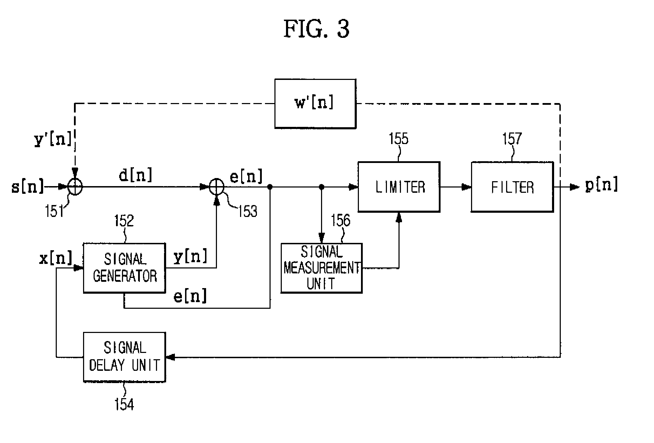

FIG. 3 is a block diagram of the echo canceller unit according to an embodiment of the present invention. The echo canceller unit includes a signal input unit 151, a signal generator 152, a signal canceller 153, a signal delay unit 154, a limiter 155, a signal measurement unit 156 and a filter 157.

The signal input unit 151 receives the digital input signal d[n] converted by the A/D converter 133 or 143, that is, the signal d[n]=s[n]+y'[n] including the combination of the original signal s[n] received from the base station 10 or the terminal 20 and the echo signal y'[n] component received via a wireless environment w'[n].

The signal generator 152 estimates the same wireless environment w[n] as the actual wireless environment w'[n] where the echo signal y'[n] is generated, using a complex signed-signed least mean square (CSS-LMS) algorithm and generates an echo duplication signal y[n] matching the echo signal y'[n] component included in the signal input to the wireless repeater 100 using the estimated wireless environment w[n].

The signal canceller 153 subtracts the echo duplication signal y[n] generated by the signal generator 152 from the digital input signal d[n]=s[n]+y'[n] received via the signal input unit 151 and cancels the echo signal y'[n] component to generate a relay signal e[n]

The signal delay unit 154 delays the signal, from which the echo signal y'[n] component has been cancelled by the signal canceller 153, for a predetermined time and a regressor signal x[n] to the signal generator 152. The regressor signal is an input variable used when the signal generator 152 performs the CSS-LMS algorithm in order to generate the echo duplication signal y[n].

The limiter 155 limits the level of the relay signal e[n], from which the echo signal y'[n] component has been cancelled, to the level of a reference signal so as to suppress oscillation of the wireless repeater 100 even when the echo signal y'[n] is not temporarily cancelled by the signal canceller 153. A variable limiter to change the level of the reference signal according to the level of the received relay signal e[n] is used.

The signal measurement unit 156 measures the level of the relay signal e[n] input to the limiter 155 and sends the measured level of the relay signal to the limiter 155 and the filter 157 removes an unnecessary wave generated in other signal bands when the level of the relay signal e[n] is limited to the level of the reference signal by the limiter 155, thereby minimizing influence of the other signal bands.

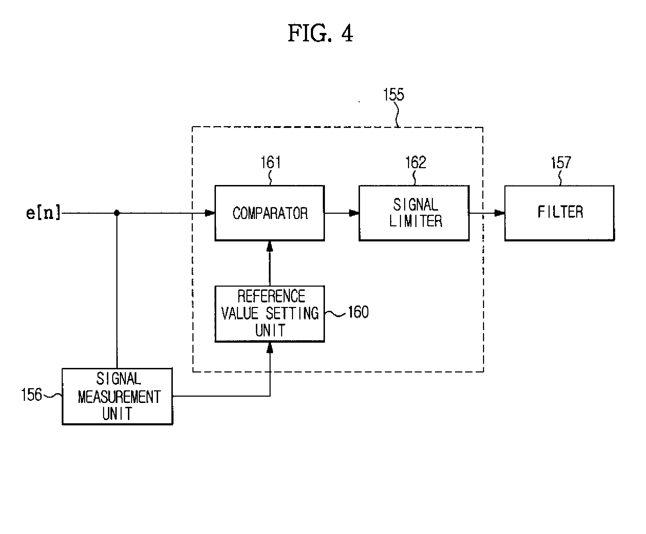

FIG. 4 is a block diagram showing in detail a variable limiter applied to the present invention. The variable limiter includes a reference value setting unit 160, a comparator 161 and a signal limiter 162.

The reference value setting unit 160 sets the level (power range) of the reference signal according to the level of the relay signal e[n] (more specifically, a power average value of a relay signal) measured by the signal measurement unit 156, and the comparator 161 compares the levels of the relay signal e[n] and the reference signal input to the comparator 161 and sends the compared result to the signal limiter 162.

The signal limiter 162 limits the level of the output signal to the range of the level of the reference signal and outputs the limited signal if the level of the relay signal e[n] is outside the range of the level of the reference signal, and outputs the output signal without limitation if the level of the relay signal e[n] is within the range of the level of the reference signal.

Hereinafter, the operations and effects of the wireless repeater having the above configuration and the method of cancelling the echo signal will be described.

The wireless repeater 100 according to the embodiment of the present invention amplifies the downlink signal received from the base station 10 via the donor antenna 110 and transmits the signal to the terminal 20 via the service antenna 120 and amplifies the uplink signal received from the terminal 20 via the service antenna 120 and transmits the signal to the base station 10 via the donor antenna 110, thereby performing the communication service.

In the embodiments of the present invention, the method of cancelling the echo signal y'[n] in the wireless repeater 100 having the ECU 134 or 144 to cancel the echo signal y'[n] generated by receiving the signal, which is transmitted via the transmission antenna (the donor antenna 110 or the service antenna 120), via the reception antenna (the service antenna 120 or the donor antenna 110) directly or through reflection in the wireless environment w'[n] when such a communication service is performed is improved.

The wireless repeater 100 having the EUC 134 or 144 according to the embodiment of the present invention generates the echo duplication signal y[n] matching the echo signal y'[n] component included in the signal received via the reception antenna (the donor antenna 110 or the service antenna 120) and cancels the echo signal y'[n] component from the original signal s[n] received from the base station 10 or the terminal 20 using the generated echo duplication single y[n].

The wireless repeater 100 according to the embodiment of the present invention estimates the wireless environment w[n] using the CSS-LMS algorithm and generates the echo duplication signal y[n] matching the echo signal y'[n] component included in the signal d[n] input to the wireless repeater 100 using the estimated wireless environment w[n].

The CSS-LMS algorithm used in the wireless repeater 100 according to the embodiment of the present invention will be briefly described with reference to FIG. 3.

In a finite impulse response (FIR) complex adaptive filter having L taps (tap-weight), the relationship among the digital input signal d[n] received via the signal input unit 151, the regressor signal x[n] received via the signal delay unit 154, the echo duplication signal y[n] generated by the signal generator 152 and the relay signal generated e[n] by the signal canceller 153 may be expressed by Equation 1 below.

## Equation 1

$$e[n] = d[n] - y[n]$$

$$y[n] = \sum_{k=0}^{L-1} w_k[n]x[n-k]$$

In Equation 1, an SS-LMS adaptive equation to estimate the wireless environment of a k-th complex tap (tap-weight) Wk[n] is defined by Equation 2 below.

## Equation 2

$$w_k[n+1] = w_k[n] + \mu \triangle w_k[n]$$

$$\triangle w_k[n] \approx csign(e[n])csign(x^*[n-k])$$

In Equation 2, a complex sign function csgn(x) is defined by Equation 3 below.

$$csgn(x) \approx sign(Re\{x\}) + jsign(Im\{x\})$$

$$sign(u) \approx \begin{cases} 1 & (u > 0) \\ -1 & (u < 0) \end{cases}$$

where $u \in P_l$

In the sign function defined in Equation 3, a function value may not be 0 unlike a general mathematical function sgn(x). That is, sign(0)=1. If such a definition is used, the CSS-LMS algorithm may be simply implemented in hardware as shown in FIG. 3. If the step parameter ΔWk[n] of Equation 2 is divided into a real number and an imaginary number, it may be expressed by Equation 4 below.

## Equation 4

$$\Delta w_k^{re}[n] = sign(e^{re}[n])sign(x^{re}[n-k]) + sign(e^{im}[n])sign(x^{im}[n-k])$$

$$\Delta w_k^{im}[n] = -sign(e^{re}[n])sign(x^{im}[n-k]) + sign(e^{im}[n])sign(x^{re}[n-k])$$

In Equation 4, the values $\Delta W_k^{re}[n]$ and $\Delta W_k^{im}[n]$ have three values of {-2, 0,2}.

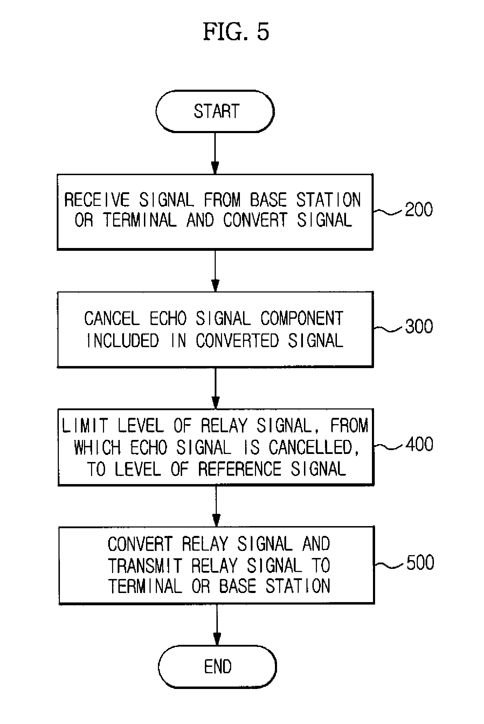

FIG. 5 is a flowchart illustrating a method of cancelling an echo signal of a wireless repeater according to an embodiment of the present invention.

In FIG. 5, the wireless repeater 100 according to the embodiment of the present invention receives the signal from the base station 10 or the terminal 20 via the donor antenna 110 or the service antenna 120. The signal received via the donor antenna 110 or the service antenna 120 is input to the low-noise amplifier 131 or 141 via the first or second duplexer 111 or 121. The low-noise amplifier 131 or 141 amplifies the received signal while minimizing noise included therein and the signal amplified by the low-noise amplifier 131 or 141 is converted from the signal of the RF band into the signal of the IF band via the frequency DNC 132 or 142. The analog signal of the IF band is converted into the digital signal via the A/D converter 133 or 143 and is input to the EUC 134 or 144 (200).

The EUC 134 or 143 cancels the echo signal y'[n] component from the digital input signal d[n] converted by the A/D converter 133 or 143 and generates the relay signal e[n] corresponding to the original signal s[n] to be transmitted (300).

The level of the relay signal e[n], from which the echo signal y'[n] component has been cancelled, is limited to the level of the reference signal by the limiter 155 so as to efficiently suppress oscillation of the wireless repeater 100 even when the echo signal y'[n] is not temporarily cancelled (400).

Thereafter, the relay signal e[n], the level of which is limited to the level of the reference signal, is converted into the analog signal via the D/A converter 135 or 145, is converted into the signal of the RF band via the frequency UPC 136 or 146, is amplified via the LPA 137 or 147, and is transmitted to the terminal 20 or the base station 10 via the second duplexer 121 or the first duplexer 111 and the service antenna 120 or the donor antenna 110 (500).

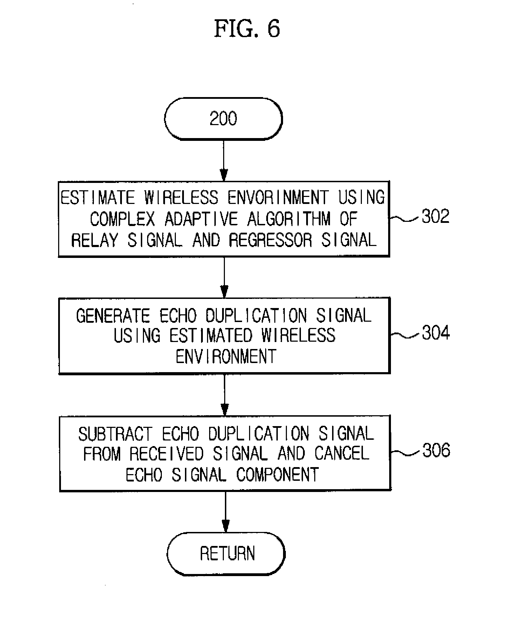

FIG. 6 is a flowchart illustrating a process of cancelling an echo signal component in FIG. 5.

In FIG. 6, the ECU 134 or 144 estimates the same wireless environment w[n] as the actual wireless environment w'[n] where the echo signal y'[n] is generated, using a complex adaptive algorithm (CSS-LMS algorithm) of the relay signal e[n] generated by the signal canceller 153 and the regressor signal x[n] received via the signal delay unit 154 (302).

Thereafter, the echo duplication signal y[n] matching the echo signal y'[n] component included in the signal input to the wireless repeater 100 is generated by the signal generator 152 using the estimated wireless environment w[n] and is sent to the signal canceller 153 (304).

The signal canceller 153 subtracts the echo duplication signal y[n] generated by the signal generator 152 from the digital input signal d[n]=s[n]+y'[n] received via the signal input unit 151, generates the relay signal e[n], from which the echo signal y' [n] component has been cancelled, and transmits the relay signal to the limiter 155 (306).

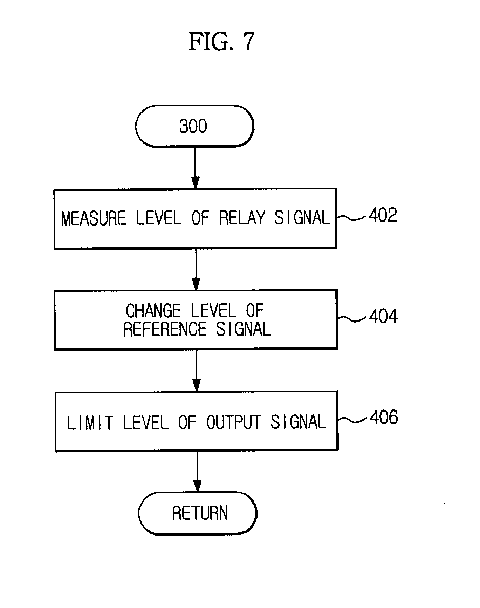

FIG. 7 is a flowchart illustrating a process of limiting the level of the relay signal, from which the echo signal component has been cancelled, in FIG. 5.

In FIG. 7, the ECU 134 or 144 measures the level of the relay signal e[n] (the power average value of the relay signal), from which the echo signal y'[n] component has been cancelled, via the signal measurement unit 156 (402).

The reference value setting unit 160 of the limiter 155 changes and sets the level (power range) of the reference signal according to the level of the relay signal e(n) measured by the signal measurement unit 156 (404), and the comparator 161 of the limiter 155 compares the levels of the relay signal e[n] and the reference signal and sends the compared result to the signal limiter 162 of the limiter 155.

The signal limiter 162 limits the level of the output signal to the range of the level of the reference signal if the level of the relay signal e[n] is outside the range of the level of the reference signal as the comparison result of the comparator 161 and outputs the output signal without limitation if the level of the relay signal e[n] is within the range of the level of the reference signal, thereby improving the effect for suppressing oscillation of the wireless repeater 100 (406).

As the level of the output signal is limited to the level of the reference signal by the limiter 155, the unnecessary wave generated in the other signal bands are removed through the filter 157, thereby minimizing influence of the other signal bands.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

**Claims**

1. A wireless repeater comprising:

   a reception unit configured to receive a signal from a base station or a terminal;
   a signal canceller configured to cancel an echo signal component included in the received signal;
   a limiter configured to limit the level of a relay signal, from the echo signal component has been cancelled, to the level of a reference signal; and
   a transmission unit configured to transmit the relay signal, the level of which has been limited to the level of the reference signal, to the terminal or the base station.

2. The wireless repeater according to claim 1, further comprising a signal generator configured to estimate a wireless environment where the echo signal is generated and to generate an echo duplication signal matching the echo signal component.

3. The wireless repeater according to claim 2, further comprising a signal delay unit to delay the output of the relay signal and output the delayed relay signal to the signal generator, wherein the signal generator estimates the wireless environment using a complex adaptive algorithm of a regressor signal and the relay signal.

4. The wireless repeater according to claim 2, wherein the signal canceller subtracts the echo duplication signal from the received signal and generates the relay signal, from which the echo signal component has been cancelled.

5. The wireless repeater according to claim 4, wherein the received signal includes a combination of an original signal received from the base station or the terminal and the echo signal component received via the wireless environment.

6. The wireless repeater according to claim 1, further comprising a signal measurement unit configured to measure the level of the relay signal input to the limiter,
wherein the limiter changes the level of the reference signal according to the level of the relay signal and limits the level of an output signal.

7. The wireless repeater according to claim 6, further comprising a filter configured to remove an unnecessary wave generated when the limiter limits the level of the output signal to the level of the reference signal.

8. A method of cancelling an echo signal of a wireless repeater, the method comprising:

   receiving a signal from a base station or a terminal;
   cancelling an echo signal component included in the received signal;
   limiting the level of a relay signal, from which the echo signal component has been cancelled, to the level of a reference signal; and
   transmitting the relay signal, the level of which has been limited to the level of the reference signal, to the terminal or the base station.

9. The method according to claim 8, further estimating a wireless environment where the echo signal is generated and generating an echo duplication signal matching the echo signal component.

10. The method according to claim 9, further comprising delaying the output of the relay signal using a complex adaptive algorithm,
wherein the estimating the wireless environment includes estimating the wireless environment using a complex adaptive algorithm of a regressor signal and the relay signal.

11. The method according to claim 9, wherein the cancelling the signal includes subtracting the echo duplication signal from the received signal and generating the relay signal, from which the echo signal component has been cancelled.

12. The method according to claim 8, further comprising:

    measuring the level of the relay signal, from which the echo signal component has been cancelled; and
    changing the level of the reference signal according to the level of the relay signal and limiting the level of an output signal.

13. The method according to claim 8, further comprising removing an unnecessary wave generated when the level of the output signal is limited to the level of the reference signal.

FIG. 1

## FIG. 2

EP 2 445 122 A1

FIG. 3

FIG. 4

# FIG. 5

```
        ┌─────────────┐
        │    START    │
        └──────┬──────┘
               │
               ▼
  ┌────────────────────────────┐
  │ RECEIVE SIGNAL FROM BASE STATION │──── 200
  │  OR TERMINAL AND CONVERT SIGNAL  │
  └──────────────┬─────────────┘
                 │
                 ▼
  ┌────────────────────────────┐
  │   CANCEL ECHO SIGNAL COMPONENT  │──── 300
  │    INCLUDED IN CONVERTED SIGNAL │
  └──────────────┬─────────────┘
                 │
                 ▼
  ┌────────────────────────────┐
  │ LIMIT LEVEL OF RELAY SIGNAL, FROM │──── 400
  │ WHICH ECHO SIGNAL IS CANCELLED,   │
  │    TO LEVEL OF REFERENCE SIGNAL   │
  └──────────────┬─────────────┘
                 │
                 ▼
  ┌────────────────────────────┐
  │    CONVERT RELAY SIGNAL AND      │──── 500
  │   TRANSMIT RELAY SIGNAL TO       │
  │   TERMINAL OR BASE STATION       │
  └──────────────┬─────────────┘
                 │
                 ▼
        ┌─────────────┐
        │     END     │
        └─────────────┘
```

13

## FIG. 6

```
          ┌─────────────┐
          │     200     │
          └─────────────┘
                 │
                 ▼
  ┌─────────────────────────────────┐
  │ ESTIMATE WIRELESS ENVORINMENT    │
  │ USING COMPLEX ADAPTIVE ALGORITHM │ ～302
  │ OF RELAY SIGNAL AND REGRESSOR    │
  │ SIGNAL                           │
  └─────────────────────────────────┘
                 │
                 ▼
  ┌─────────────────────────────────┐
  │ GENERATE ECHO DUPLICATION SIGNAL │
  │ USING ESTIMATED WIRELESS         │ ～304
  │ ENVIRONMENT                      │
  └─────────────────────────────────┘
                 │
                 ▼
  ┌─────────────────────────────────┐
  │ SUBTRACT ECHO DUPLICATION SIGNAL │
  │ FROM RECEIVED SIGNAL AND CANCEL  │ ～306
  │ ECHO SIGNAL COMPONENT            │
  └─────────────────────────────────┘
                 │
                 ▼
          ┌─────────────┐
          │   RETURN    │
          └─────────────┘
```

FIG. 7

```
                    ┌──────────┐
                    │   300    │
                    └────┬─────┘
                         │
                         ▼
   ┌─────────────────────────────────────┐
   │  MEASURE  LEVEL  OF  RELAY  SIGNAL   │──402
   └─────────────────┬───────────────────┘
                     │
                     ▼
   ┌─────────────────────────────────────┐
   │          CHANGE  LEVEL  OF           │──404
   │          REFERENCE  SIGNAL           │
   └─────────────────┬───────────────────┘
                     │
                     ▼
   ┌─────────────────────────────────────┐
   │   LIMIT  LEVEL  OF  OUTPUT  SIGNAL   │──406
   └─────────────────┬───────────────────┘
                     │
                     ▼
              ┌────────────┐
              │   RETURN   │
              └────────────┘
```

## INTERNATIONAL SEARCH REPORT

| International application No. |
| --- |
| **PCT/KR2009/007792** |

### A. CLASSIFICATION OF SUBJECT MATTER

***H04B 7/14(2006.01)i***

According to International Patent Classification (IPC) or to both national classification and IPC

### B. FIELDS SEARCHED

Minimum documentation searched (classification system followed by classification symbols)
IPC: H04B 7/15, H04B 15/00, H04B 7/14

Documentation searched other than minimum documentation to the extent that such documents are included in the fields searched
Korean Utility models and applications for Utility models: IPC as above

Electronic data base consulted during the international search (name of data base and, where practicable, search terms used)
eKIPASS (KIPO internal) & Keywords: wireless repeater, echo, cancellation

### C. DOCUMENTS CONSIDERED TO BE RELEVANT

| Category* | Citation of document, with indication, where appropriate, of the relevant passages | Relevant to claim No. |
| --- | --- | --- |
| X | US 2009/0061766 A1 (YIDONG DING et al.) 05 March 2009<br>See abstract, figures 6-7, 9-10 and paragraphs 50-63, 71, 79 | 1-13 |
| A | US 2009/0149130 A1 (YOO, HWA SEON et al.) 11 June 2009<br>See abstract, figures 3-4 and claims 1, 9 | 1-13 |
| A | WO 2009/061084 A1 (SOLID TECHNOLOGIES, INC.) 14 May 2009<br>See abstract, figure 2 and claims 1-15 | 1-13 |

☐ Further documents are listed in the continuation of Box C.      ☒ See patent family annex.

| | |
| --- | --- |
| *    Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |
| Date of the actual completion of the international search<br><br>26 JULY 2010 (26.07.2010) | Date of mailing of the international search report<br><br>**27 JULY 2010 (27.07.2010)** |
| Name and mailing address of the ISA/KR<br>     Korean Intellectual Property Office<br>     Government Complex-Daejeon, 139 Seonsa-ro, Daejeon 302-701,<br>     Republic of Korea<br>Facsimile No. 82-42-472-7140 | Authorized officer<br><br><br>Telephone No. |

Form PCT/ISA/210 (second sheet) (July 2009)

INTERNATIONAL SEARCH REPORT
Information on patent family members

International application No.

**PCT/KR2009/007792**

| Patent document cited in search report | Publication date | Patent family member | Publication date |
|---|---|---|---|
| US 2009-0061766 A1 | 05.03.2009 | US 2006-0040611 A1<br>US 7596352 B2 | 23.02.2006<br>29.09.2009 |
| US 2009-0149130 A1 | 11.06.2009 | CN 101488800 A<br>EP 2068460 A2<br>JP 2009-141965 A<br>KR 10-2009-0060036 A | 22.07.2009<br>10.06.2009<br>25.06.2009<br>11.06.2009 |
| WO 2009-061084 A1 | 14.05.2009 | KR 10-0953117 B1 | 19.04.2010 |

Form PCT/ISA/210 (patent family annex) (July 2009)